(19) **Europäisches Patentamt**

**European Patent Office**

**Office européen des brevets**

(11) **EP 0 867 416 B1**

(12) **EUROPEAN PATENT SPECIFICATION**

(45) Date of publication and mention
of the grant of the patent:
**21.08.2002 Bulletin 2002/34**

(51) Int Cl.[7]: **C03C 13/06**, C03C 13/00

(21) Application number: **98105441.4**

(22) Date of filing: **25.03.1998**

(54) **Noncrystalline biodegradable heat resistant inorganic fibres comprising Si02, CaO and P205**

Nicht kristalline biologisch abbaubare hitzebeständige anorganische Si02,Ca0 und P205 enthaltende Faser

Fibres inorganiques non-crystallines biodegradables et résistant à la chaleur à base de Si02, Ca0 et P205

(84) Designated Contracting States:
**BE DE FR IT SE**

(30) Priority: **26.03.1997 JP 8999197**
**23.10.1997 JP 30808197**

(43) Date of publication of application:
**30.09.1998 Bulletin 1998/40**

(73) Proprietors:
- **NICHIAS CORPORATION**
 **Tokyo (JP)**
- **Nichias Ceratech Corporation**
 **Kamiminochi-gun, Nagano (JP)**

(72) Inventors:
- **Aoki, Susumu**
 **Yokohama-shi, Kanagawa (JP)**
- **Fukuoka, Kiyoshi**
 **Kawasaki-shi, Kanagawa (JP)**
- **Kamiko, Shiro**
 **Yokohama-shi, Kanagawa (JP)**
- **Kobayashi, Noboru**
 **Suzaka-shi, Nagano (JP)**

(74) Representative: **Grünecker, Kinkeldey,**
**Stockmair & Schwanhäusser Anwaltssozietät**
**Maximilianstrasse 58**
**80538 München (DE)**

(56) References cited:
WO-A-92/09536       WO-A-95/29135
WO-A-95/31410       WO-A-95/32925
WO-A-95/32926       WO-A-97/20782
US-A- 4 090 882      US-A- 5 250 488

**Description**

FIELD OF THE INVENTION

The present invention relates to noncrystalline inorganic fibers excellent in the heat resistance and the body fluid-solubility.

BACKGROUND OF THE INVENTION

A rock wool is glassy inorganic fibers obtained by adding silica, dolomite, etc., as a component ratio-adjusting material into a mixture of a steel slag and various mineral raw materials, heating and melting the resulting mixture in a cupola furnace or an electric furnace, and forming fibers from the melt by a method of blowing the melt with a compressed air (blowing method), a method of making the melt collide against a high-speed rotor (rotor method), etc.

The composition thereof generally comprises from 35 to 50% by weight of $SiO_2$, from 10 to 20% by weight of $Al_2O_3$, from 30 to 40% by weight of CaO, from 3 to 6% by weight of MgO, and from 0.1 to 3% by weight of $FeO + Fe_2O_3$ and, in many cases, further comprises impurities originated from the raw materials such as $TiO_2$, MnO, $Cr_2O_3$, BaO, $Na_2O$, $K_2O$, S, etc., in a total amount of about 5% by weight.

The rock wools, which are relatively inexpensive incombustible fibers, are widely used as refractory covering materials and high-temperature heat insulating materials in the state of bulk fibers and also as insulating materials of the forms of blankets, matts, felts, boards and the like. However, in conventional general rock wood products, the upper limit of the usable temperature is at most 750°C, and the rock wool products are softened or melted at a higher temperature than the above temperature to thereby cause a severe shrinkage and deformation.

Under the present condition, ceramic fibers such as a silica-alumina series must be used for the application requiring the resistance to a high temperature of about 800°C or more. But, ceramic fibers are far expensive as compared with rock wools.

Also, it has been confirmed that when the dusts of ceramic fibers are breathed in a human and accumulated in the lungs, there is a possibility of causing various diseases of respiratory organs, and a definite regulation has been applied to the use of ceramic fibers for refractory covering materials, etc.

Such a regulation has been coming to apply to rock wools, recently.

The cause of the diseases of respiratory organs attributable to the inorganic fibers is complicated and many matters have not yet been clarified, but it is considered that most of the problems can be removed if the inorganic fibers breathed in the lungs dissolve in the body fluid and is absorbed therein.

Thus, considering the influences on the human's health, it is desirable to increase the solubility of inorganic fibers in the body fluid, so that even when the dusts of inorganic fibers are breathed in the lungs, they do not accumulate and cause harmful actions. From this point of view, the solubility of inorganic fibers in the body fluid becomes important, and the inorganic fibers exhibiting a good solubility, in the solubility test carried out using a physiological saline solution (e.g., physiological sodium chloride solution) in place of the body fluid, has been required.

In the German regulation to dangerous goods (TRGS 905 announced officially by BMA), the indicator value called the KI value, which is calculated based on a chemical composition, is employed as the determination standard of the body fluid solubility, that is, the safety in place of the above-described solubility test. That is, in regard to inorganic fibers, the value obtained by subtracting twice of the content (% by weight) of aluminum oxide from the sum total of the contents (% by weight) of the oxides of sodium, potassium, calcium, magnesium, barium, and boron in the composition thereof is defined as the carcinogenic index • KI value. As the value is smaller, the dangerous property is higher, and the inorganic fibers having the value of 40 or higher are treated to have no carcinogenic possibility.

For example, the alumina-silicate series ceramic fibers can endure a high temperature of from 1000 to 1300°C. However, since the constitutional components comprise about 50% by weight of $Al_2O_3$ and about 50% by weight of $SiO_2$, the KI value reaches -100 and the ceramic fibers are chemically stable and have a very large resistance to the physiological saline solution. Also, when the ceramic fibers are exposed to a high temperature of 1,000°C or higher, cristobalite, which is a kind of a free silicic acid, is formed. The ceramic fibers having the free silicic acid formed become a cause of the diseases of the respiratory organs such as a silicosis. Accordingly, the recognition that the ceramic fibers are harmful fibers for the human body has been increased, and IARC (International Agency for Research on Cancer) graded that the ceramic fibers are probably a substance having a carcinogenic property for a human.

The KI value of the general rock wool having the above-described composition is far large as compared with that of the ceramic fibers, but does not reach 40 and is approximately from 5 to 18. The solubility in a physiological saline solution is not so different from that of the ceramic fibers. Accordingly, about the harmfulness in the case of accumulating the rock wool in the human body, the IARC graded that the rock wool is probably a substance having a carcinogenic property for a human as the case of the ceramic fibers.

Thus, in regard to the rock wool series noncrystalline inorganic fibers, the attempt of improving the body fluid

**EP 0 867 416 B1**

solubility has been made, and for example, in the invention of JP-B-7-42139 (the term "JP-B" as used herein means an examined published Japanese patent application), alkaline earth metal silicate series fibers having a good solubility in a physiological saline solution are obtained by forming a composition comprising from 0.1 to 30% by weight of MgO and from 0 to 10% by weight of $Al_2O_3$, and the rest of $SiO_2$ and CaO. Calculating the KI values about the fibers disclosed in the examples thereof, the KI values are in the range of approximately from 20 to 50. With respect to the solubility, the fibers are improved as compared with general rock wools, but many fibers are still insufficient. With respect to the heat resistance, JP-B-7-42139 emphasizes that the fibers can be continuously used in the range of from about 743°C to 815°C. However, some of the fibers in the examples thereof do not have the high heat resistance, and it appears that the heat resistance of these fibers are the same as or a lightly superior to those of the conventional rock wools.

Also, an unexamined published PCT Patent application JP-W-8-511760 discloses inorganic fibers having a biodecomposing property which are made up of from 40 to 67% by weight of $SiO_2$ and from 20 to 45% by weight of CaO as the indispensable components. The KI values are not described, but calculating the KI values of the inorganic fibers shown in the examples, the KI values are 40 or higher. However, the limit of the heat resistance is considered to be about 700°C and does not exceed those of the conventional rock wools.

Furthermore, JP-A-4-228455 (the term "JP-A" as used herein means an "unexamined published Japanese patent application") discloses inorganic fibers which are composed of from 37 to 58% by weight of $SiO_2$, from 7 to 40% by weight of CaO, from 4 to 16% by weight of MgO, from 1 to 10% by weight of $P_2O_5$, from 4 to 14% by weight of $Al_2O_3$, and from 4 to 14% by weight of $Fe_2O_3$ as the indispensable components, and explains that when these inorganic fibers are brought into contact with a physiological medium, the fibers are decomposed. However, the KI values in the examples all do not reach 40, and the heat resistance of these inorganic fibers are almost the same as those of conventional rock wools.

The KI value is propagating as a useful safety determining standard not only in Germany but also in the world. Accordingly, the improvement of the heat resistance of rock wools can not be considered without considering the KI value. So far, with respect to not only rock wools but also ceramic fibers, those having a high heat resistance enduring a high temperature exceeding 1,000°C and the KI value of 40 or higher can not be obtained.

SUMMARY OF THE INVENTION

An object of the present invention is to provide inorganic fibers which are noncrystalline inorganic fiber capable of being produced easily and at a low cost, similarly to rock wools, and have a high heat resistance almost the same as that of ceramic fibers, the KI value of 40 or higher, and a low accumulating property in the human body.

That is, the novel inorganic fibers of the present invention are noncrystalline inorganic fibers composed of $SiO_2$ and CaO as the main components and having the KI value of 40 or higher, wherein the noncrystalline inorganic fibers contain $P_2O_5$, as an inevitable small amount component for improving the heat resistance, in the necessary amount for acquiring the heat resistance enduring heating to 1,000°C for 3 hours.

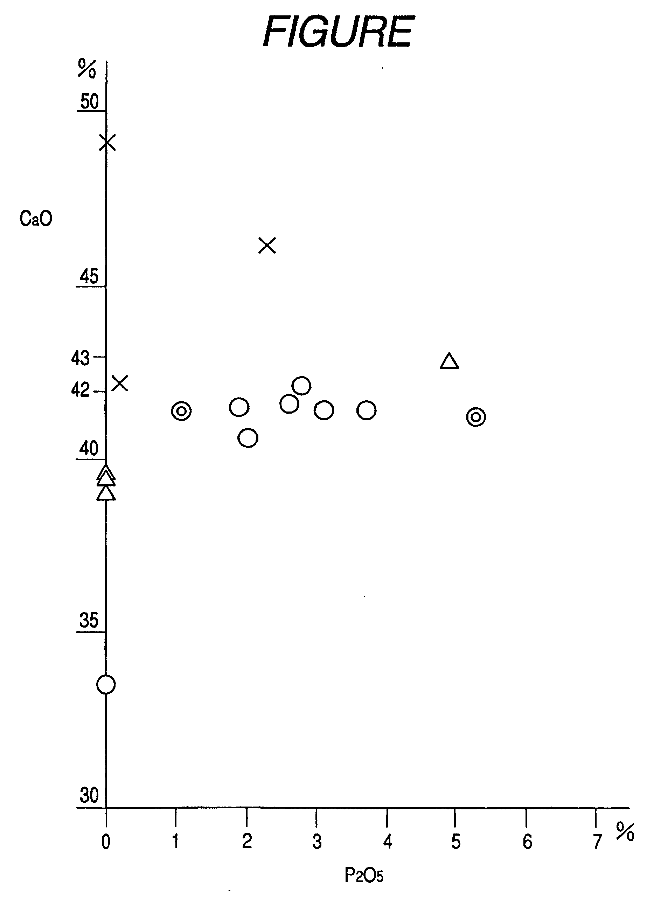

BRIEF DESCRIPTION OF THE DRAWING

Figure is a graph showing the influences of the content of CaO and the addition of $P_2O_5$ on the heat resistance of the $SiO_2$-CaO series noncrystalline inorganic fibers.

DETAILED DESCRIPTION OF THE INVENTION

In the present invention, the term "enduring heating to 1,000°C for 3 hours" means that the shrinking rate is less than 5% after the heating test at 1,000°C for 3 hours in the heat resistance test method, which will be described in the example shown below.

In the typical chemical composition of the inorganic fibers of the present invention, CaO is approximately from 40 to 43% by weight, the amount of the sum total of CaO and $SiO_2$ is at least 85% by weight, preferably at least 90% by weight, and $P_2O_5$, which is the inevitable third component, is approximately from 0.5 to 10% by weight, preferably approximately from 1 to 7% by weight.

Even the components usually contained in many rock wools, it is preferred that the contents of other components than the above-described three components in the present invention are as small as possible. As long as minerals are used as the raw materials, the entrance of unnecessary components as impurities is unavoidable. However, it is preferred that the content of $Al_2O_3$ is not more than the amount 0.3% by weight, the content of MgO is not more than about 3% by weight, and the total content of other metal oxides is not more than about 2% by weight.

As described above, in the inorganic fibers of the present invention, the fundamental composition of $SiO_2$ and CaO as the main components is employed and a small amount of $P_2O_5$ is incorporated as the heat resistance improving component, and this is based on the following knowledge obtained in the process of investigating the composition

3

capable of achieving the object of the present invention.

First, as the result of re-investigating the main components constituting conventional rock wools, the following matters have been confirmed;

(1) $Al_2O_3$ is not only the component of reducing the KI value but also the component of remarkably lowering the actual solubility in a physiological saline solution. Accordingly, it is necessary to reduce the content of $Al_2O_3$ as small as possible and ideally, the content thereof is zero.

(2) MgO is a profitable component from the view point of increasing the KI value, but there is a tendency of reducing the actual solubility in a physiological saline solution (see, Table 4 below). Accordingly, it is desirable to reduce the content of the component as small as possible.

(3) CaO is one of the main components in conventional ordinary rock wools and increases both the KI value and the solubility in the physiological saline solution.

Based on these results, as the preferred composition of the fibers from the point of view of the KI value and the physiological saline solution solubility, calcium silicate fibers comprising $SiO_2$ and CaO as the main components are considered. To make the KI value 40 or higher in the composition, it is necessary that the content of CaO is about 40% by weight or more, while the $SiO_2$-CaO series fibers having CaO in an amount of 40% by weight or more are poor in the heat resistance, and the temperature which the fibers can endure is about 750°C at most.

However, the heat resistance can be greatly improved by incorporating a small amount of $P_2O_5$ therein such that the fibers can endure heating to 1,000°C for 3 hours. Furthermore, it has been confirmed that the fibers also becomes compositionally stable. This is considered as follows. Stable wollastonite can be quickly formed utilizing $P_2O_5$ as the nuclei in the formation of wollastonite from $SiO_2$ and CaO in the fibers heated to the high temperature, whereby the liberation of silica is prevented and at the same time, the occurrence of the shrinkage and the collapse of the fibers is prevented.

However, if the content of CaO exceeds about 43% by weight, the remarkable reduction of the heat resistance is caused, and even when $P_2O_5$ is incorporated, it is difficult to attain a sufficient heat resistance.

In addition, because $P_2O_5$ is a component having no relation to the KI value and slightly lower the actual physiological saline solution solubility. Since the influence thereof is slight (as shown in Table 3 below), the component can be used as a heat resistance-improving component in order to obtain the inorganic fibers having a less accumulating property in the human body.

Figure is a graph showing the influences of the content of CaO and the addition of $P_2O_5$ onto the heat resistance of the $SiO_2$-CaO series inorganic fibers as described above. It can be seen from the graph of Figure that the high heat resistance (evaluations: ◯ and ⊛) of the inorganic fibers, i.e., 5% or lower of the shrinkage by heating to 1000°C for 3 hours, is attained by incorporating $P_2O_5$ into the inorganic fibers having the content of CaO of from 40 to 43% by weight. The heat resistance test method is the same as that in the examples described below and the data are extracted from the test results about the samples of the examples, the comparative examples described below and other samples including commercially available products).

As described above, the noncrystalline inorganic fibers having the KI value of 40 or higher (usually from 40 to about 42) together with the excellent solubility in physiological saline solution and the high heat resistance can be obtained according to the present invention.

In the case of producing the inorganic fibers of the present invention, it is preferred that $P_2O_5$, which is the component for improving the heat resistance, is incorporated in an amount of approximately from 0.5 to 7% by weight to the weight of the inorganic fibers. The particularly preferred content of $P_2O_5$ is approximately from 1 to 6% by weight. If the content of $P_2O_5$ is more than the above-described range (in particular, 10% by weight or more), it is difficult to improve the heat resistance while keeping the desired KI value. Also, in the production technique, it is difficult to melt the raw material mixture and form fibers therefrom.

Considering the content of $P_2O_5$, the content of CaO can be calculated as the amount necessary for making the KI value 40 or higher. The content of $SiO_2$, which constitutes the most of the residual components, is approximately from 51 to 58% by weight. If the content of $SiO_2$ is more than 58% by weight, it may be difficult to obtain the inorganic fibers having the KI value of 40 or higher, and if the content thereof is less than 51% by weight, it may be difficult to obtain the inorganic fibers having a heat resistance.

When mineral raw materials are used, it is unavoidable many other metal oxides than the above-described indispensable components are intermixed, but it is preferred that they are as small as possible. Particularly, the content of $Al_2O_3$ is at most about 0.5% by weight, preferably 0.3% by weight or less. If the content of $Al_2O_3$ is more than 0.5% by weight, it becomes difficult to attain the desired values with respect to the KI value and the physiological saline solution solubility. MgO also reduces the physiological saline solution solubility as described above and hence it is preferred that the content of MgO is 3% by weight or less. When the other metal oxides as impurities such as $Na_2O$, $K_2O$, BaO and $B_2O_3$ are incorporated in a large amount, the heat resistance is reduced. Therefore, it is desired that the other metal oxides each is incorporated in an amount of not more than about 0.5% by weight, with the total amount thereof being not more than 2% by weight.

The inorganic fibers of the present invention can be produced in the same manner as in the production of conventional rock wools except that the raw materials and the compounding ratio thereof are selected such that the chemical composition satisfies the ranges described above.

Suitable examples of the raw materials, which can be used in the present invention, include silica (quartz), wollastonite, quick lime, slaked lime, calcium carbonate, dolomite, magnesium oxide, magnesium carbonate, phosphates of alkali metals or alkaline earth metals, and calcium pyrophosphate. These raw materials are arbitrarily compounded, the compounded mixture was heated and melt in an electric furnace or a cupola furnace, and then fibers can be formed by a well-known system employed for the production of conventional rock wools, such as a blowing system and a rotor system.

The inorganic fibers are collected by an ordinary method and then formed into a board or other forms by lamination, addition of a binder and curing treatment, and the like, and can be used as heat-insulating materials and the like.

Examples and Comparative Examples

Wollastonite, silica and calcium pyrophosphate as the raw materials were mixed so as to have the compositions shown in Table 1 below. The resulting mixture was heated and melted in an electric furnace, and inorganic fibers were formed by a blowing system and then collected.

The thus-obtained inorganic fibers were evaluated in terms of the physiological saline solution solubility and the heat resistance according to the following methods.

Physiological Saline Solution Solubility

The above-obtained inorganic fibers were ground such that they pass through a sieve of 200 mesh, and 1 g of each ground sample was accurately weighed and charged in a 300 ml Erlenmeyer flask equipped with a stop cock. Thereto was added 150 ml of a physiological saline solution, the flask was placed in an incubator having a temperature of 40°C, and the flask was horizontally oscillated for 50 hours at a rate of 120 times per minute. Thereafter, the sample was filtrated, and dried, and the undissolved components were accurately weighed, whereby the loss by dissolution was obtained. The weight reduction rate (%), [(the weight of the charged sample - the weight of the undissolved components)/ the weight of the charged sample] $\times$ 100, is defined as the physiological saline solution dissolution rate.

Heat Resistance Test Method

In a porcelain-made crucible ("B-1" produced by Nikkato Corp., which corresponds to one being B type according to JIS K 1301 and having a volume of 30 ml) was placed 1.5 g of a sample, which was unfastened well to remove shots (granular materials), without pressing, and the surface thereof was flattened. After drying the sample at 110°C, the crucible containing the sample was photographed from the upper side to confirm that the inside diameter of the crucible was the same as the diameter of the mass of the fibers. The crucible was placed in an electric furnace previously heated to a temperature of 700°C and heated to 700°C for 3 hours. Thereafter, the crucible was taken out from the electric furnace and after cooling to room temperature, the crucible was photographed from the upper side, though no change was observed. Then, the crucible was placed in an electric furnace previously heated to 800°C and heated for 3 hours. The crucible was taken out from the electric furnace and was photographed. Subsequently, the a crucible was heated to 900°C, 1,000°C, and then 1,100°C according to the above-described procedures.

After finishing the heating test, with respect to the photograph photographed in each step, the inside diameter of the crucible and the diameter of the mass of the fibers in the crucible were measured by slide calipers to calculate a shrinkage percentage as follows.

$$\text{Shrinkage Percentage (\%)} = [(\text{the inside diameter of the}$$

$$\text{crucible - the diameter of the mass of the fibers})/ \text{ the inside}$$

$$\text{diameter of the crucible}] \times 100$$

The heat resistance of the inorganic fibers was evaluated by the following criteria.

◎ : 1% or lower

◖ : more than 1% to 5%

Δ : more than 5% to 10%

x : The shrinkage percentage is more than 10% and the external appearance clearly shows that the sample is largely shrank or changed as being sintered.

For comparison, the samples of the following comparative examples were subjected to the same test.

Comparative Example 1:   Same composition as Example 1 except that $P_2O_5$ was not contained.

Comparative Example 2:   Same composition as Example 4 except that $P_2O_5$ was not contained.

Comparative Example 3:   Same composition as Example 6 except that $P_2O_5$ was not contained.

Comparative Example 4:   Conventional standard rock wool.

Comparative Example 5:   Alumina-silicate ceramic fibers.

Comparative Example 6:   Commercially available inorganic fibers as fibers having good physiological saline water solubility.

The results are shown in Table 1 and Table 2 below.

Table 1

| | Example 1 | Example 2 | Example 3 | Example 4 | Example 5 | Example 6 |
|---|---|---|---|---|---|---|
| Composition (wt.%) | | | | | | |
| SiO$_2$ | 56.6 | 55.0 | 55.6 | 54.7 | 54.2 | 52.2 |
| CaO | 41.4 | 41.5 | 41.1 | 41.6 | 41.4 | 41.2 |
| P$_2$O$_5$ | 1.1 | 1.9 | 2.0 | 2.6 | 3.1 | 5.3 |
| MgO | 0.0 | 0.8 | 0.2 | 0.0 | 0.0 | 0.2 |
| Al$_2$O$_3$ | 0.2 | 0.2 | 0.2 | 0.2 | 0.2 | 0.2 |
| Others | 0.4 | 0.5 | 0.7 | 0.7 | 0.8 | 0.5 |
| KI Value | 41.0 | 41.9 | 40.9 | 41.2 | 41.0 | 41.0 |
| Physiological Saline Solution Solubility Rate (%) | 4.9 | 5.7 | 4.0 | 4.9 | 4.7 | 4.6 |
| Heat Resistance Shrinkage(%) After Heating | | | | | | |
| 800°C | 0.4 | 0.4 | 0.0 | 0.4 | 1.5 | 0.0 |
| 900°C | 0.7 | 1.3 | 2.2 | 1.8 | 1.6 | 0.9 |
| 1000°C | 0.7 | 1.8 | 2.6 | 2.0 | 2.0 | 0.9 |
| 1100°C | 0.7 | 2.0 | 2.6 | 2.0 | 2.0 | 0.9 |
| Evaluation | ◎ | ○ | ○ | ○ | ○ | ◎ |

## Table 2

| | Comparative Example 1 | Comparative Example 2 | Comparative Example 3 | Comparative Example 4 | Comparative Example 5 | Comparative Example 6 |
|---|---|---|---|---|---|---|
| **Composition (wt.%)** | | | | | | |
| $SiO_2$ | 57.2 | 56.2 | 54.9 | 39.3 | 51.5 | 62.0 |
| CaO | 41.9 | 42.7 | 43.8 | 33.1 | 0.0 | 33.5 |
| $P_2O_5$ | 0.0 | 0.0 | 0.0 | 0.0 | 0.0 | 0.0 |
| MgO | 0.0 | 0.3 | 0.0 | 5.8 | 0.0 | 3.2 |
| $Al_2O_3$ | 0.2 | 0.2 | 0.2 | 15.2 | 48.2 | 0.6 |
| Others | 1.2 | 0.8 | 0.7 | 6.6 | 0.3 | 0.7 |
| KI Value | 41.5 | 42.6 | 43.4 | 10.4 | −96.2 | 35.5 |
| Physiological Saline Solution Solubility (%) | 5.0 | 5.0 | 5.1 | 0.7 | 0.3 | 5.7 |
| **Heat Resistance** Shrinkage (%) After Heating | | | | | | |
| 800°C | >10 | >10 | >10 | Sintered | 0.0 | 0.4 |
| 900°C | - | - | - | - | 0.0 | 0.9 |
| 1000°C | - | - | - | - | 0.7 | 1.1 |
| 1100°C | - | - | - | - | 1.1 | 1.3 |
| Evaluation | x | x | x | x | ◯ | ◯ |

Reference Example 1

The change of the physiological saline solution solubility of a rock wool having a fundamental composition of $SiO_2$-CaO and the KI value (equivalent to the weight % value of CaO) of about 42 by incorporating $P_2O_5$ into the rock wool was studied. The results are shown in Table 3 below.

It can be seen from the results that the physiological saline solution stability of the rock wool was lowered a little by incorporating $P_2O_5$, but the influence thereof was slight.

Table 3

| Influence of the Content of $P_2O_5$ on the Physiological Saline Solution Solubility Rate (unit: % by weight) | | | | | | |
|---|---|---|---|---|---|---|
| | $SiO_2$ | CaO | MgO | $P_2O_5$ | Others | Physiological Saline Solution Solubility Rate |
| Sample A1 | 58.0 | 42.0 | 0 | 0 | 0.1 | 6.2% |
| Sample A2 | 53.5 | 42.9 | 0 | 3.2 | 0.4 | 5.7% |
| Sample A3 | 51.9 | 42.4 | 0 | 5.6 | 0.1 | 5.4% |

Reference Example 2

The influence on the physiological saline solution solubility of a rock wool having a fundamental composition of $SiO_2$-CaO-MgO and the KI value (equivalent to the sum total amount of CaO and MgO) of approximately from 42 to 48 by changing the content of MgO was studied. The results are as shown in Table 4 below. That is, as the content of MgO is increased, the physiological saline solution stability is more reduced.

Table 4

| Influence of the Content of MgO to the Physiological Saline Solution Solubility Rate (unit: % by weight) | | | | | | |
|---|---|---|---|---|---|---|
| | $SiO_2$ | CaO | MgO | $P_2O_5$ | Others | Physiological Saline Solution Solubility Rate |
| Sample B1 | 58.0 | 42.0 | 0 | 0 | 0.1 | 6.2% |
| B2 | 55.4 | 44.3 | 0 | 0 | 0.3 | 5.9% |
| B3 | 51.2 | 44.8 | 3.0 | 0 | 1.0 | 6.1% |
| B4 | 52.2 | 41.2 | 5.0 | 0 | 1.6 | 5.2% |
| B5 | 53.6 | 37.3 | 8.0 | 0 | 1.1 | 5.0% |
| B6 | 51.2 | 36.7 | 11.0 | 0 | 1.1 | 4.4% |
| B7 | 52.3 | 27.4 | 17.3 | 2.9 | 0.1 | 2.6% |
| B8 | 57.1 | 11.1 | 31.7 | 0 | 0.1 | 0.9% |
| B9 | 54.1 | 11.2 | 31.6 | 2.9 | 0.2 | 0.0% |

As described above, the inorganic fibers of the present invention have the composition having the carcinogenic index, KI value of 40 or higher, which is regarded desirable in the German regulation to dangerous goods, are excellent in the physiological saline solution solubility, and further have a high heat resistance over the conventional rock wools, while the inorganic fibers can be produced at a low cost as in the case of conventional rock wools.

While the invention has been described in detail and with reference to specific embodiments thereof, it will be apparent to one skilled in the art that various changes and modifications can be made therein without departing from the spirit and scope thereof.

**Claims**

1. Non-crystalline inorganic fibers comprising
   $SiO_2$, CaO and $P_2O_5$,
   not more than 0.5% by weight $Al_2O_3$,
   not more than 3% by weight MgO and
   not more than 2% by weight , based on the total amount, of other metal oxides,
   wherein $SiO_2$ and CaO are the main components of the inorganic fibers,
   wherein said $P_2O_5$ is present in an amount necessary for said inorganic fibers to have a shrinking rate of less than 5% when being heated at 1,000°C for 3 hours, and
   wherein said inorganic fibers have a KI value of 40 or more.

2. The non-crystalline inorganic fibers of claim 1, wherein the amount of $P_2O_5$ is from 0.5 to 7% by weight.

3. Non-crystalline inorganic fibers comprising

at least 90% by weight $SiO_2$ and CaO,
0.5 to 7% by weight $P_2O_5$,
not more than 0.5% by weight $Al_2O_3$,
not more than 3% by weight MgO and
not more than 2% by weight , based on the total amount, of other metal oxides,
wherein said $P_2O_5$ is present in an amount necessary for said inorganic fibers to have a shrinking rate of less than 5% when being heated at 1,000°C for 3 hours, and
wherein said inorganic fibers have a KI value of 40 or more.

4. Calcium silicate non-crystalline inorganic fibers comprising
CaO,
0.5 to 7% by weight $P_2O_5$,
not more than 0.5% by weight $Al_2O_3$,
not more than 3% by weight MgO and
not more than 2% by weight , based on the total amount, of other metal oxides,
wherein said CaO is present in an amount sufficient for said calcium silicate non-crystalline fibers to have a KI value of at least 40, and
wherein said inorganic fibers have a shrinking rate of less than 5% when being heated at 1,000°C for 3 hours.

5. Non-crystalline inorganic fibers having a KI value of 40 or more and having a shrinking rate of less than 5% when being heated at 1,000°C for 3 hours,
wherein said inorganic fibers comprise
51 to 58% by weight $SiO_2$,
40 to 43% by weight CaO,
0.5 to 7% by weight $P_2O_5$,
not more than 0.5% by weight $Al_2O_3$,
not more than 3% by weight MgO and
not more than 2% by weight , based on the total amount, of other metal oxides.

6. The non-crystalline inorganic fibers of claim 5, comprising not more than 0.3% by weight $Al_2O_3$.


**Patentansprüche**

1. Nicht kristalline anorganische Fasern, umfassend
$SiO_2$, CaO und $P_2O_5$,
nicht mehr als 0,5 Gew.-% $Al_2O_3$,
nicht mehr als 3 Gew.-% MgO und
nicht mehr als 2 Gew.-%, basierend auf der Gesamtmenge, an anderen Metalloxiden,
wobei $SiO_2$ und CaO die Hauptkomponenten der anorganischen Fasern sind,
und wobei besagtes $P_2O_5$ in einer Menge vorliegt, notwendig so dass die anorganischen Fasern eine Schrumpfrate von weniger als 5 % aufweisen, wenn sie auf 1000°C für 3 Stunden erwärmt werden, und wobei besagte anorganischen Fasern einen KI-Wert von 40 oder mehr aufweisen.

2. Nicht kristalline anorganische Fasern nach Anspruch 1, wobei die Menge an $P_2O_5$ von 0,5 bis 7 Gew.-% beträgt.

3. Nicht kristalline anorganische Fasern, umfassend mindestens 90 Gew.-% $SiO_2$ und
CaO,
0,5 bis 7 Gew.-% $P_2O_5$,
nicht mehr als 0,5 Gew.-% $Al_2O_3$,
nicht mehr als 3 Gew.-% MgO und
nicht mehr als 2 Gew.-%, basierend auf der Gesamtmenge, an anderen Metalloxiden,
wobei besagtes $P_2O_5$ in einer Menge vorliegt, notwendig so dass die anorganischen Fasern eine Schrumpfrate von weniger als 5 % aufweisen, wenn sie auf 1000°C für 3 Stunden erwärmt werden, und wobei besagte anorganische Fasern einen KI-Wert von 40 oder mehr aufweisen.

4. Nicht kristalline anorganische Calciumsilicatfasern, umfassend
CaO,

0,5 bis 7 Gew.-% P$_2$O$_5$,
nicht mehr als 0,5 Gew.-% Al$_2$O$_3$,
nicht mehr als 3 Gew.-% MgO und
nicht mehr als 2 Gew.-%, basierend auf der Gesamtmenge, an anderen Metalloxiden,
wobei besagtes CaO in einer Menge vorliegt, ausreichend, so dass besagte nicht kristallinen Calciumsilicatfasern einen KI-Wert von mindestens 40 aufweisen, und
wobei besagte anorganische Fasem eine Schrumpfrate von weniger als 5 % aufweisen, wenn sie auf 1000°C für 3 Stunden erwärmt werden.

5. Nicht kristalline anorganische Fasern mit einem KI-Wert von 40 oder mehr und mit einer Schrumpfrate von weniger als 5 %, wenn sie auf 1000°C für 3 Stunden erwärmt werden,
wobei besagte anorganische Fasern
51 bis 58 Gew.-% SiO$_2$,
40 bis 43 Gew.-% CaO,
0,5 bis 7 Gew.-% P$_2$O$_5$,
nicht mehr als 0,5 Gew.-% Al$_2$O$_3$,
nicht mehr als 3 Gew.-% MgO und
nicht mehr als 2 Gew.-%, basierend auf der Gesamtmenge, an anderen Metalloxiden umfassen.

6. Nicht kristalline anorganische Fasern nach Anspruch 5, umfassend nicht mehr als 0,3 Gew.-% Al$_2$O$_3$.

## Revendications

1. Fibres minérales non cristallines comprenant
SiO$_2$, CaO et P$_2$O$_5$,
pas plus de 0,5 % en masse de Al$_2$O$_3$,
pas plus de 3 % en masse de MgO et
pas plus de 2 % en masse, par rapport à la quantité totale, d'autres oxydes métalliques,
SiO$_2$ et CaO étant les composants principaux des fibres minérales,
dans lesquelles ledit P$_2$O$_5$ est présent en une quantité nécessaire pour que lesdites fibres minérales aient un taux de retrait inférieur à 5 % quand on les chauffe à 1000°C pendant 3 heures, lesdites fibres minérales ayant une valeur de l'indice de cancérogénicité, KI, égale ou supérieure à 40.

2. Fibres minérales non cristallines selon la revendication 1, dans lesquelles la quantité de P$_2$O$_5$ est de 0,5 à 7 % en masse.

3. Fibres minérales non cristallines comprenant
au moins 90 % en masse de SiO$_2$ et CaO,
0,5 à 7 % en masse de P$_2$O$_5$,
pas plus de 0,5 % en masse de Al$_2$O$_3$,
pas plus de 3 % en masse de MgO et
pas plus de 2 % en masse, par rapport à la quantité totale, d'autres oxydes métalliques,
dans lesquelles ledit P$_2$O$_5$ est présent en une quantité nécessaire pour que lesdites fibres minérales aient un taux de retrait inférieur à 5 % quand on les chauffe à 1000°C pendant 3 heures, lesdites fibres minérales ayant une valeur de KI égale ou supérieure à 40.

4. Fibres minérales non cristallines de silicate de calcium comprenant
CaO,
0,5 à 7 % en masse de P$_2$O$_5$,
pas plus de 0,5 % en masse de Al$_2$O$_3$,
pas plus de 3 % en masse de MgO et
pas plus de 2 % en masse, par rapport à la quantité totale, d'autres oxydes métalliques,
dans lesquelles ledit CaO est présent en une quantité suffisante pour que lesdites fibres non cristallines de silicate de calcium aient une valeur de KI d'au moins 40, et
lesdites fibres minérales ayant un taux de retrait inférieur à 5 % quand on les chauffe à 1000°C pendant 3 heures.

5. Fibres minérales non cristallines ayant une valeur de KI égale ou supérieure à 40 et ayant un taux de retrait inférieur à 5 % quand on les chauffe à 1000°C pendant 3 heures,
lesdites fibres minérales comprenant
51 à 58 % en masse de $SiO_2$,
40 à 43 % en masse de CaO,
0,5 à 7 % en masse de $P_2O_5$,
pas plus de 0,5 % en masse de $Al_2O_3$,
pas plus de 3 % en masse de MgO et
pas plus de 2 % en masse, par rapport à la quantité totale, d'autres oxydes métalliques.

**6.** Fibres minérales non cristallines selon la revendication 5, ne comprenant pas plus de 0,3 % en masse de $Al_2O_3$.

# *FIGURE*